# EUROPEAN PATENT SPECIFICATION

(11) **EP 3 803 069 B1**
(45) Date of publication and mention of the grant of the patent: **26.07.2023**
(21) Application number: 18811647.9
(22) Date of filing: 05.06.2018
(51) Int. Cl.: F01N 1/00, F01N 3/10, F01N 1/16, B60P 3/00, F01N 9/00, B60H 1/00

(54) **TRANSPORT REFRIGERATION UNIT EXHAUST SYSTEM MANAGEMENT FOR LOW NOISE EMISSIONS**
ABGASSYSTEMVERWALTUNG FÜR TRANSPORTKÜHLEINHEIT FÜR NIEDRIGE GERÄUSCHEMISSIONEN
SYSTÈME D'ÉCHAPPEMENT D'UNE UNITÉ DE TRANSPORT DE RÉFRIGÉRATION POUR DE FAIBLES ÉMISSIONS SONORES

(43) Date of publication of application: 14.04.2021
(73) Proprietor: Carrier Corporation, Palm Beach Gardens, FL 33418 (US)
(72) Inventor: RENAULT, Loïc, 76520 Franqueville Saint Pierre (FR)
(74) Representative: Lavoix
(86) International application number: PCT/IB2018/001253
(87) International publication number: WO 2019/234471

(56) References cited:
- WO-A1-2014/085672
- WO-A1-2014/106060
- DE-A1-102012 005 073
- DE-A1-102015 223 223

## Description

### BACKGROUND

The following description relates to transport refrigeration units (TRUs) and, more specifically, to TRUs that are capable of exhaust system management for low noise emissions.

Truck and trailer TRUs operating in certain jurisdictions, such as Europe, need to comply with low noise emissions requirements. Thus, TRU products have been developed with low noise emissions requirements compliance as a goal and tend to include specific mufflers developed for noise reductions purposes. Nevertheless, it has been observed that the specific mufflers often lack flexibility in operations. For example, in some jurisdictions, noise restrictions is only necessary by night or during the evening whereas there are no noise restrictions during daytime hours. However, since the specific mufflers can be inflexible, they do not offer both optimized cooling capacity (when no low noise level is required) and silent operation when noise concerns are critical.

WO 2014/106060A1 discloses a method for automatically adjusting control parameters of a transport refrigeration system (TRS), comprising determining geographic data according to a real-time location and time information of the TRS, comprising determining, via a control unit of the TRS, a set of control parameters correlated to the geographic data, and comprising running, via the control unit, the TRS based on the set of control parameters.

WO 2014/085672 A1 discloses a system to control a prime mover of a transport refrigeration system. A controller may be configured to receive input from various information sources including a global satellite positioning system and/or a human machine interface. The controller can be configured to select a prime mover operation mode based on the input received. In particular, the controller can select a noise reduction operation mode when the transport refrigeration system is located in a noise regulated area, and can select a fuel efficient mode when said system is located outside said area. The noise reduction mode may include increasing the speed of the prime mover in a soft sloped ramp.

DE 10 2012 005073 A1 discloses a motor vehicle with an engine and a unit for engine load independent influencing of engine noise emission of the vehicle. An environmental sensor is adapted to estimate the noise sensitivity of the environment and to allow a stronger engine noise emission in an environment assessed as little noise sensitive than in an environment assessed as strong noise sensitive. The unit comprises a flap arranged in an intake section and an exhaust section of the engine.

### BRIEF DESCRIPTION

According to an aspect of the disclosure, a transport refrigeration unit (TRU) is provided and includes a power generation unit, a catalytic element, an exhaust pipe, first and second tubular elements fluidly interposed between the power generation unit and the catalytic element and between the catalytic element and the exhaust pipe, respectively, first and second throttle valves and a control system. The first and second throttle valves are operably disposed to control fluid flows in the first and second tubular elements, respectively. The control system is configured to control the power generation unit and the first and second throttle valves to effect the sound produced by the TRU.

In accordance with additional or alternative embodiments, the control system is configured to control the power generation unit and the first and second throttle valves to operate in at least a relatively low-noise cooling mode and a relatively high-noise cooling mode.

In accordance with additional or alternative embodiments, the power generation unit includes an engine configured to produce products of combustion and an exhaust manifold through which the products of combustion produced within the engine are flown and the catalytic element includes a muffler.

In accordance with additional or alternative embodiments, the control system is configured to control the power generation unit and the first and second throttle valves in accordance with programming.

In accordance with additional or alternative embodiments, the control system is configured to control the power generation unit and the first and second throttle valves in accordance with a location, a time, a schedule and combinations thereof.

In accordance with additional or alternative embodiments, the control system includes a power generation unit controller, which is configured to control an rpm of the power generation unit and a computing unit disposed in signal communication with the first and second throttle valves and the power generation unit controller and configured to control opening and closing states of the first and second throttle valves and to instruct the power generation unit controller to control the rpm of the power generation unit.

In accordance with additional or alternative embodiments, the control system further includes a noise sensor located at the exhaust pipe and the computing unit is further disposed in signal communication with the noise sensor and is configured to control the opening and closing states of the first and second throttle valves and to instruct the power generation unit controller to control the rpm of the power generation unit in accordance with readings of the noise sensor.

In accordance with additional or alternative embodiments, the control system is configured to control the power generation unit and the first and second throttle valves to effect the sound produced by the TRU.

In accordance with additional or alternative embodiments, the control system is configured to control the power generation unit and the first and second throttle valves to operate in at least a relatively low-noise cooling mode and a relatively high-noise mode.

In accordance with additional or alternative embodiments, the power generation unit includes an engine configured to produce products of combustion and an exhaust manifold through which the products of combustion produced within the engine are flown and the catalytic element includes a muffler.

In accordance with additional or alternative embodiments, the control system is configured to control the power generation unit and the first and second throttle valves in accordance with programming.

In accordance with additional or alternative embodiments, the control system is configured to control the power generation unit and the first and second throttle valves in accordance with a location, a time, a schedule and combinations thereof.

In accordance with additional or alternative embodiments, the control system includes a power generation unit controller, which is configured to control an rpm of the power generation unit and a computing unit disposed in signal communication with the first and second throttle valves and the power generation unit controller and configured to control opening and closing states of the first and second throttle valves and to instruct the power generation unit controller to control the rpm of the power generation unit.

In accordance with additional or alternative embodiments, the control system further includes a noise sensor located at the exhaust pipe and the computing unit is further disposed in signal communication with the noise sensor and is configured to control the opening and closing states of the first and second throttle valves and to instruct the power generation unit controller to control the rpm of the power generation unit in accordance with readings of the noise sensor.

According to an aspect of the disclosure, a method of operating a transport refrigeration unit (TRU) is provided. The method includes flowing products of combustion between a power generation unit and a catalytic element and then between the catalytic element and an exhaust pipe and controlling an rpm of the power generation unit and opening and closing states of first and second throttle valves installed between the power generation unit and the catalytic element and between the catalytic element and the exhaust pipe. The method further comprises sensing noise of the transport refrigeration unit at the exhaust pipe and executing the controlling of the rpm of the power generation unit and of the opening and closing states of the first and second throttle valves, in accordance with results of the sensing.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 is a schematic illustration of a transport refrigeration unit (TRU) in accordance with embodiments;
FIG. 2 is a schematic diagram of a control system of the TRU of FIG. 1 in accordance with embodiments; and
FIG. 3 is a flow diagram illustrating a method of operating a transport refrigeration unit (TRU) in accordance with embodiments.

These and other advantages and features will become more apparent from the following description taken in conjunction with the drawings.

### DETAILED DESCRIPTION

As will be described below, a TRU exhaust system is provided and offers flexible noise management capability. The TRU exhaust system provides for optimized cooling capacity when no low noise levels are required and silent operation capability when noise concerns are critical. The TRU exhaust system includes a noise exhaust muffler and manages low noise emissions using exhaust throttle valves. A first one of the exhaust throttle valves is installed between an engine manifold and the noise exhaust muffler and a second exhaust throttle valve is installed downstream from the noise exhaust muffler and upstream from a final tail pipe. A TRU controller is manages operations of both the first and second exhaust throttle valves when low noise emissions are required while also reducing engine rpm to enter low noise mode when necessary. During nighttime operations, for PIEK example, engine rpm and both the first and second exhaust throttle valves are able to reduce noise emissions by reducing exhaust gas flow.

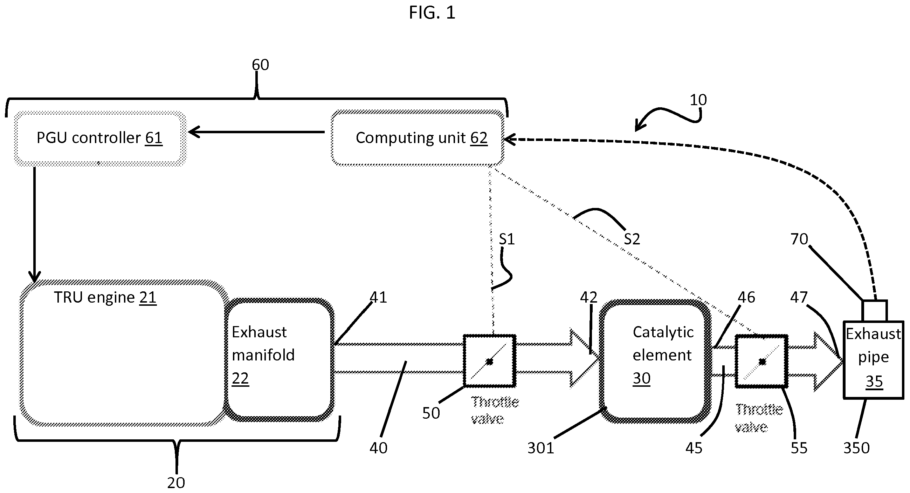

With reference to FIG. 1, a TRU 10 is provided and includes a power generation unit 20, a catalytic element 30, an exhaust pipe 35, first and second tubular elements 40 and 45, at least one of first and second exhaust throttle valves 50 and 55 and a control system 60. The TRU 10 may also include a noise sensor 70 that may be, but is not required to be, located at or proximate to the exhaust pipe 35.

The power generation unit 20 may include an engine or, more particularly, a TRU engine 21 and an exhaust manifold 22. The TRU engine 21 is configured to be receptive of air and fuel, to mix the air and fuel and to combust the air and fuel to generate high pressure and high temperature products of combustion. Once generated in the TRU engine 21, the products of combustion are flown through the exhaust manifold 22, which is disposed adjacent to the TRU engine 21. The TRU engine 21 can be run at various revolutions per minute (RPMs) in accordance with various operational conditions and noise requirements. The catalytic element 30 may be provided as any system or device that is capable of catalyzing the products of combustion and may include or be provided as a muffler 301 or another suitable device. The exhaust pipe 35 may include or be provided as a tail pipe 350.

The first tubular element 40 is coupled at an upstream end 41 thereof to the exhaust manifold 22 and at a downstream end 42 thereof to the catalytic element 30 and is formed to define a flow path from the exhaust manifold 22 to the catalytic element 30 by which the products of combustion in the TRU engine 21 can flow as fluid flows from the exhaust manifold 22 to the catalytic element 30. The second tubular element 45 is coupled at an upstream end 46 thereof to the catalytic element 30 and at a downstream end 47 thereof to the exhaust pipe 35 and is formed to define a flow path from the catalytic element 30 to the exhaust pipe 35 by which the products of combustion can continue to flow toward an exterior of the TRU 10.

The first exhaust throttle valve 50 may be operably disposed within the first tubular element 40 and may be responsive to a signal S 1, such as a pulse width modulation (PWM) signal from the control system 60, to assume a closed position at which fluid flows from the exhaust manifold 22 to the catalytic element 30 are prevented or inhibited or one of multiple open positions at which some or all of the fluid flows from the exhaust manifold 22 to the catalytic element 30 are permitted. The second exhaust throttle valve 55 may be operably disposed within the second tubular element 45 and may be responsive to a signal S2, such as a PWM signal from the control system 60, to assume a closed position at which fluid flows from the catalytic element 30 to the exhaust pipe 35 are prevented or inhibited or one of multiple open positions at which some or all of the fluid flows from the catalytic element 30 to the exhaust pipe 35 are permitted.

While the description provided herein allows for embodiments in which only one of the first and second exhaust throttle valves 50 and 55 are included in the TRU 10, the following description will relate to those cases in which both the first and second exhaust throttle valves 50 and 55 are included in the TRU 10. This is being done for clarity and brevity and should not be interpreted as limiting the scope of the present disclosure or the claims in any manner.

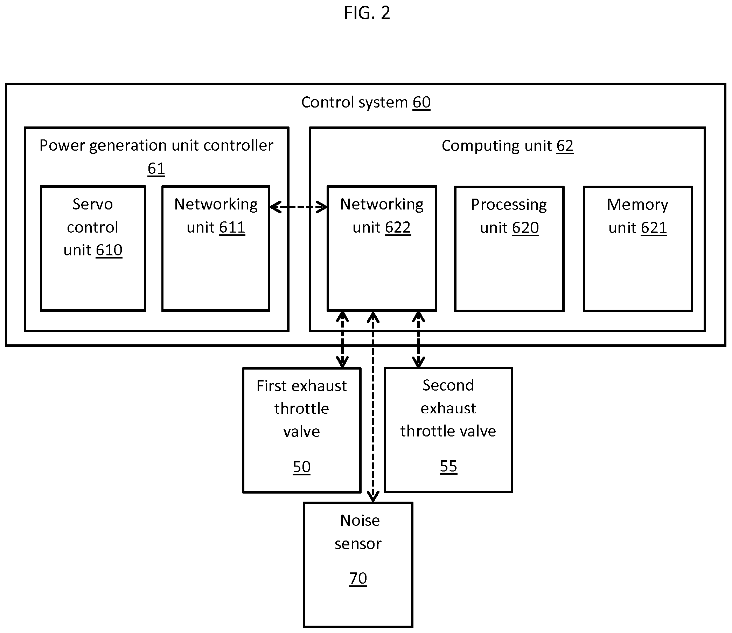

With reference to FIG. 2, the control system 60 is disposed in wired or wireless signal communication with the power generation unit 20 or more particularly the TRU engine 21, the first and second exhaust throttle valves 50 and 55 and, where applicable, the noise sensor 70. The control system is thus disposed and configured to control the power generation unit 20 and the first and second throttle valves 50 and 55 to operate in at least one or more of a relatively low-noise, non-optimized cooling mode and an optimized cooling, relatively high-noise mode. The control system 60 may include a power generation unit controller 61, which is configured to control an rpm of the TRU engine 21 of the power generation unit 20, and a computing unit 62. The computing unit 62 is disposed in signal communication with the first and second throttle valves 50 and 55 and the power generation unit controller 61 and is configured to control opening and closing states of the first and second throttle valves 50 and 55 and to instruct the power generation unit controller 61 to control the rpm of the TRU engine 21 of the power generation unit 20. The power generation unit controller 61 and the computing unit 62 may be provided as components of a same control element or as standalone components.

In any case, control system 60 effectively controls operations of the power generation unit 20 and the first and second exhaust throttle valves 50 and 55 in open or closed-loop control system schemes. For example, the control system 60 may control the operations of the power generation unit 20 and the first and second exhaust throttle valves 50 and 55 in accordance with preset programming or in accordance with a location, a time, a predefined schedule and combinations thereof. The present programming and/or the location, the time and the predefined schedule may stipulate, for example, that the power generation unit 20 and the first and second throttle valves 50 and 55 are to operate in a given jurisdictions in the relatively low-noise, non-optimized cooling mode during nighttime hours and in the given jurisdiction in the optimized cooling, relatively high-noise mode during daylight hours. In accordance with further embodiments, the control system 60 may control the operations of the power generation unit 20 and the first and second throttle valves 50 and 55 at least partially in accordance with the results of the sensing by the noise sensor 70 (e.g., in a closed-loop or feedback loop control scheme).

For example, where the present programming and/or the predefined schedule stipulate that the power generation unit 20 and the first and second throttle valves 50 and 55 are to operate in the relatively low-noise, non-optimized cooling mode during nighttime hours, the computing unit 62 may generate and issue signals S1 and S2 to the first and second exhaust throttle valves 50 and 55 to assume closed or only slightly open positions and may instruct the power generation unit controller 61 to cause the power generation unit 20 to run at a relatively low rpm condition. Here, if the noise sensor 70 senses that noise emanating from the TRU 10 is subsequently still too high or at an excessively low level, the control system 10 can modulate the rpm of the power generation unit 20 and/or the opening or closing states of the first and second exhaust throttle valves 50 and 55.

As an alternative example, where the present programming and/or the predefined schedule stipulate that the power generation unit 20 and the first and second throttle valves 50 and 55 are to operate in the optimized cooling, relatively high-noise mode during daylight hours, the computing unit 62 may generate and issue signals S1 and S2 to the first and second exhaust throttle valves 50 and 55 to assume fully open or substantially open positions and may instruct the power generation unit controller 61 to cause the power generation unit 20 to run at a relatively high rpm condition. Here, if the noise sensor 70 senses that noise emanating from the TRU 10 is subsequently too high even for daylight hours or at a low level at which further cooling optimization is possible, the control system 10 can modulate the rpm of the power generation unit 20 and/or the opening or closing states of the first and second exhaust throttle valves 50 and 55.

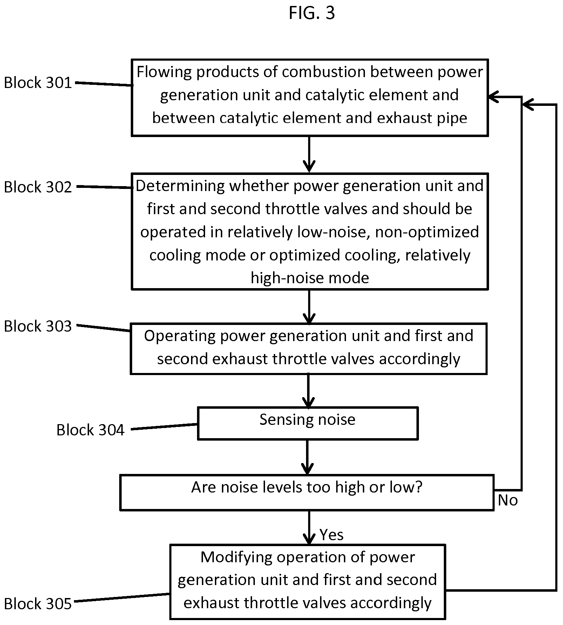

As shown in FIG. 2, the power generation unit controller 61 may include a servo control unit 610, which is operably coupled to the power generation unit 20, and a networking unit 611 by which the servo control unit 610 is communicative with the computing unit 62. The computing unit 62 may include a processing unit 620, a memory unit 621 and a networking unit 622 by which the processing unit 620 is communicative with the first and second exhaust throttle valves 50 and 55, the noise sensor 70 and the networking unit 611. The memory unit 621 has the preset programming and/or the predefined schedule as well as executable instructions stored thereon. The executable instructions are readable and executable by the processing unit 620. When the executable instructions are read and executed by the processing unit 620, the executable instructions cause the processing unit 620 to operate as described herein and, in particular, to operate as described with reference to the method of FIG. 3.

With reference to FIG. 3, a method of operating the TRU 10 is provided and includes flowing products of combustion between the power generation unit 20 and the catalytic element 30 and then between the catalytic element 30 and an exhaust pipe 35 (block 301), determining whether the power generation unit 30 and the first and second throttle valves 50 and 55 should be operated in the relatively low-noise, non-optimized cooling mode or the optimized cooling, relatively high-noise mode in accordance with preset programming and/or a predefined schedule (block 302) and operating the power generation unit 20 and the first and second exhaust throttle valves 50 and 55 accordingly (block 303). The method may further include sensing noise levels at or proximate to the exhaust pipe 35 (block 304) and modifying the operation of the power generation unit 20 and the first and second exhaust throttle valves 50 and 55 in an event the sensed noise levels are determined to be excessively high or low (block 305).

Technical effects and benefits of the present disclosure are that TRU noise emissions are made to be flexible depending on customer needs in real time. A single TRU version unit can run following customer preferred options, either in optimized cooling capacity mode (standard noise) or in very low noise version. This provides flexibility and avoids a specific low noise exhaust design. It also avoids specific low noise muffler development.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A transport refrigeration unit (10), comprising:
a power generation unit (20);
a catalytic element (30);
an exhaust pipe (35);
a first tubular element (40) fluidly interposed between the power generation unit (20) and the catalytic element (30);
a second tubular element (45) fluidly interposed between the catalytic element (30) and the exhaust pipe (35);
the transport refrigeration unit (10) being **characterised by** a first throttle valve (50) operably disposed to control fluid flows in the first tubular element (40);
a second throttle valve (45) operably disposed to control fluid flows in the second tubular element (45); and
a control system (60) configured to control the power generation unit (20) and the first and second throttle valves (40, 45) to effect the sound produced by the transport refrigeration unit (10).

2. The transport refrigeration unit (10) according to claim 1, wherein the control system (60) is configured to control the power generation unit (20) and the first and second throttle valves (40, 45) to operate in at least a relatively low-noise cooling mode and a relatively high-noise cooling mode.

3. The transport refrigeration unit (10) according to either of claims 1 or 2, wherein the power generation unit (20) comprises an engine (21) configured to produce products of combustion and an exhaust manifold (22) through which the products of combustion produced within the engine (21) are flown and the catalytic element (30) comprises a muffler.

4. The transport refrigeration unit (10) according to any of claims 1-3, wherein the control system (60) is configured to control the power generation unit (20) and the first and second throttle valves (40, 45) in accordance with programming.

5. The transport refrigeration unit (10) according to any of claims 1-3, wherein the control system (60) is configured to control the power generation unit (20) and the first and second throttle valves (40, 45) in accordance with a location, a time, a schedule and combinations thereof.

6. The transport refrigeration unit (10) according to any of claims 1-5, wherein the control system (60) comprises:
a power generation unit controller (61), which is configured to control an rpm of the power generation unit (20); and
a computing unit (62) disposed in signal communication with the first and second throttle valves (40, 45) and the power generation unit controller (61) and configured to control opening and closing states of the first and second throttle valves (40, 45) and to instruct the power generation unit controller (61) to control the rpm of the power generation unit (20).

7. The transport refrigeration unit (10) according to claim 6, wherein:
the control system (60) further comprises a noise sensor (70) located at the exhaust pipe (35), and
the computing unit (62) is further disposed in signal communication with the noise sensor (70) and is configured to control the opening and closing states of the first and second throttle valves (40, 45) and to instruct the power generation unit controller (61) to control the rpm of the power generation unit (20) in accordance with readings of the noise sensor (70).

8. The transport refrigeration unit (10) according to claim 1, wherein the control system (60) is configured to control the power generation unit (20) and the first and second throttle valves (40, 45) to effect the sound produced by the transport refrigeration unit (10).

9. The transport refrigeration unit (10) according to claim 8, wherein the control system (60) is configured to control the power generation unit (20) and the first and second throttle valves (40, 45) to operate in at least a relatively low-noise, cooling mode and a relatively high-noise cooling mode.

10. The transport refrigeration unit (10) according to either of claims 8 or 9, wherein the power generation unit (20) comprises an engine configured to produce products of combustion and an exhaust manifold through which the products of combustion produced within the engine are flown and the catalytic element (30) comprises a muffler.

11. The transport refrigeration unit (10) according to any of claims 8-10, wherein the control system (60) is configured to control the power generation unit (20) and the first and second throttle valves (40, 45) in accordance with programming.

12. The transport refrigeration unit (10) according to any of claims 8-10, wherein the control system (60) is configured to control the power generation unit (20) and the first and second throttle valves (40, 45) in accordance with a location, a time, a schedule and combinations thereof.

13. The transport refrigeration unit (10) according to any of claims 8-12, wherein the control system (60) comprises:
a power generation unit controller (61), which is configured to control an rpm of the power generation unit (20); and
a computing unit (62) disposed in signal communication with the first and second throttle valves (40, 45) and the power generation unit controller (61) and configured to control opening and closing states of the first and second throttle valves (40, 45) and to instruct the power generation unit controller (61) to control the rpm of the power generation unit (20).

14. The transport refrigeration unit (10) according to claim 13, wherein:
the control system (60) further comprises a noise sensor (70) located at the exhaust pipe (35), and
the computing unit (62) is further disposed in signal communication with the noise sensor (70) and is configured to control the opening and closing states of the first and second throttle valves (40, 45) and to instruct the power generation unit controller (61) to control the rpm of the power generation unit (20) in accordance with readings of the noise sensor (70).

15. A method of operating a transport refrigeration unit (10), the method comprising:
flowing products of combustion between a power generation unit (20) and a catalytic element (30);
flowing products of combustion between the catalytic element (30) and an exhaust pipe (35); and
controlling an rpm of the power generation unit (20) and opening and closing states of:
a first throttle valve (50) installed between the power generation unit (20) and the catalytic element (30), and
a second throttle valve (55) installed between the catalytic element (30) and the exhaust pipe (35),
wherein the method further comprises sensing noise of the transport refrigeration unit (10) at the exhaust pipe (35) and executing the controlling of the rpm of the power generation unit and of the opening and closing states of the first and second throttle valves, in accordance with results of the sensing.

## Patentansprüche

1. Transportkühleinheit (10), umfassend:
eine Stromerzeugungseinheit (20);
ein katalytisches Element (30);
ein Abgasrohr (35);
ein erstes rohrförmiges Element (40), das fluidisch zwischen die Stromerzeugungseinheit (20) und das katalytische Element (30) eingefügt ist;
ein zweites rohrförmiges Element (45), das fluidisch zwischen das katalytische Element (30) und das Abgasrohr (35) eingefügt ist;
wobei die Transportkühleinheit (10) durch ein erstes Drosselventil (50) gekennzeichnet ist, das funktionsfähig angeordnet ist, um Fluidströme in dem ersten rohrförmigen Element (40) zu steuern;
ein zweites Drosselventil (45), das funktionsfähig angeordnet ist, um Fluidströme in dem zweiten rohrförmigen Element (45) zu steuern; und
ein Steuersystem (60), das konfiguriert ist, um die Stromerzeugungseinheit (20) und das erste und das zweite Drosselventil (40, 45) zu steuern, um den von der Transportkühleinheit (10) erzeugten Schall zu beeinflussen.

2. Transportkühleinheit (10) nach Anspruch 1, wobei das Steuersystem (60) konfiguriert ist, um die Energieerzeugungseinheit (20) und das erste und das zweite Drosselventil (40, 45) zu steuern, um zumindest in einem relativ geräuscharmen Kühlmodus und einem relativ geräuschintensiven Kühlmodus zu arbeiten.

3. Transportkühleinheit (10) nach einem der Ansprüche 1 oder 2, wobei die Energieerzeugungseinheit (20) einen Motor (21) umfasst, der so konfiguriert ist, um Verbrennungsprodukte zu erzeugen, und einen Abgaskrümmer (22), durch den die in dem Motor (21) erzeugten Verbrennungsprodukte geleitet werden, und wobei das katalytische Element (30) einen Schalldämpfer umfasst.

4. Transportkühleinheit (10) nach einem der Ansprüche 1 bis 3, wobei das Steuersystem (60) konfiguriert ist, um die Energieerzeugungseinheit (20) und das erste und das zweite Drosselventil (40, 45) entsprechend einer Programmierung zu steuern.

5. Transportkühleinheit (10) nach einem der Ansprüche 1 bis 3, wobei das Steuersystem (60) konfiguriert ist, um die Energieerzeugungseinheit (20) und das erste und zweite Drosselventil (40, 45) abhängig von einem Ort, einer Zeit, einem Zeitplan und Kombinationen davon zu steuern.

6. Transportkühleinheit (10) nach einem der Ansprüche 1-5, wobei das Steuersystem (60) Folgendes umfasst:
eine Steuerung (61) der Energieerzeugungseinheit, die konfiguriert ist, um eine Drehzahl der Stromerzeugungseinheit (20) zu steuern; und
eine Recheneinheit (62), die in Signalkommunikation mit dem ersten und dem zweiten Drosselventil (40, 45) und der Steuerung (61) der Stromerzeugungseinheit angeordnet und konfiguriert ist, um den Öffnungs- und den Schließzustand des ersten und des zweiten Drosselventils (40, 45) zu steuern und die Steuerung (61) der Stromerzeugungseinheit anzuweisen, die Drehzahl der Stromerzeugungseinheit (20) zu steuern.

7. Transportkühleinheit (10) nach Anspruch 6, wobei:
das Steuersystem (60) ferner einen Geräuschsensor (70) umfasst, der sich an dem Abgasrohr (35) befindet, und
die Recheneinheit (62) ferner in Signalkommunikation mit dem Geräuschsensor (70) angeordnet und konfiguriert ist, um den Öffnungs- und den Schließzustand des ersten und des zweiten Drosselventils (40, 45) zu steuern und die Steuerung (61) der Stromerzeugungseinheit anzuweisen, die Drehzahl der Stromerzeugungseinheit (20) gemäß den Messwerten des Geräuschsensors (70) zu steuern.

8. Transportkühleinheit (10) nach Anspruch 1, wobei das Steuersystem (60) konfiguriert ist, um die Energieerzeugungseinheit (20) und das erste und das zweite Drosselventil (40, 45) zu steuern, um den von der Transportkühleinheit (10) erzeugten Schall zu beeinflussen.

9. Transportkühleinheit (10) nach Anspruch 8, wobei das Steuersystem (60) konfiguriert ist, um die Energieerzeugungseinheit (20) und das erste und das zweite Drosselventil (40, 45) zu steuern, um zumindest in einem relativ geräuscharmen Kühlmodus und einem relativ geräuschintensiven Kühlmodus zu arbeiten.

10. Transportkühleinheit (10) nach einem der Ansprüche 8 oder 9, wobei die Energieerzeugungseinheit (20) einen Motor umfasst, der so konfiguriert ist, um Verbrennungsprodukte zu erzeugen, und einen Abgaskrümmer, durch den die in dem Motor erzeugten Verbrennungsprodukte geleitet werden, und wobei das katalytische Element (30) einen Schalldämpfer umfasst.

11. Transportkühleinheit (10) nach einem der Ansprüche 8-10, wobei das Steuersystem (60) konfiguriert ist, um die Energieerzeugungseinheit (20) und das erste und das zweite Drosselventil (40, 45) entsprechend einer Programmierung zu steuern.

12. Transportkühleinheit (10) nach einem der Ansprüche 8-10, wobei das Steuersystem (60) konfiguriert ist, um die Energieerzeugungseinheit (20) und das erste und zweite Drosselventil (40, 45) abhängig von einem Ort, einer Zeit, einem Zeitplan und Kombinationen davon zu steuern.

13. Transportkühleinheit (10) nach einem der Ansprüche 8-12, wobei das Steuersystem (60) Folgendes umfasst:
eine Steuerung (61) der Energieerzeugungseinheit, die konfiguriert ist, um eine Drehzahl der Stromerzeugungseinheit (20) zu steuern; und
eine Recheneinheit (62), die in Signalkommunikation mit dem ersten und dem zweiten Drosselventil (40, 45) und der Steuerung (61) der Stromerzeugungseinheit angeordnet und konfiguriert ist, um den Öffnungs- und den Schließzustand des ersten und des zweiten Drosselventils (40, 45) zu steuern und die Steuerung (61) der Stromerzeugungseinheit anzuweisen, die Drehzahl der Stromerzeugungseinheit (20) zu steuern.

14. Transportkühleinheit (10) nach Anspruch 13, wobei:
das Steuersystem (60) ferner einen Geräuschsensor (70) umfasst, der sich an dem Abgasrohr (35) befindet, und
die Recheneinheit (62) ferner in Signalkommunikation mit dem Geräuschsensor (70) angeordnet und konfiguriert ist, um den Öffnungs- und den Schließzustand des ersten und des zweiten Drosselventils (40, 45) zu steuern und die Steuerung (61) der Stromerzeugungseinheit anzuweisen, die Drehzahl der Stromerzeugungseinheit (20) gemäß den Messwerten des Geräuschsensors (70) zu steuern.

15. Verfahren zum Betreiben einer Transportkühleinheit (10), das Verfahren umfassend:
Leiten von Verbrennungsprodukten zwischen einer Stromerzeugungseinheit (20) und einem katalytische Element (30);
Leiten von Verbrennungsprodukten zwischen dem katalytischen Element (30) und einem Abgasrohr (35); und
Steuern einer Drehzahl der Stromerzeugungseinheit (20) und des Öffnungs- und des Schließzustands von:
einem ersten Drosselventil (50), das zwischen der Stromerzeugungseinheit (20) und dem katalytischen Element (30) installiert ist, und
einem zweiten Drosselventil (55), das zwischen dem katalytischen Element (30) und dem Abgasrohr (35) installiert ist,
wobei das Verfahren ferner ein Erfassen von Geräuschen der Transportkühleinheit (10) an dem Abgasrohr (35) und ein Ausführen der Steuerung der Drehzahl der Stromerzeugungseinheit und des Öffnungs- und Schließzustands des ersten und des zweiten Drosselventils gemäß den Resultaten der Erfassung umfasst.

## Revendications

1. Groupe frigorifique de transport (10) comprenant :
une unité de génération électrique (20) ;
un élément catalytique (30) ;
un tuyau d'échappement (35) ;
un premier élément tubulaire (40) fluidiquement interposé entre l'unité de génération électrique (20) et l'élément catalytique (30) ;
un second élément tubulaire (45) fluidiquement interposé entre l'élément catalytique (30) et le tuyau d'échappement (35) ;
le groupe frigorifique de transport (10) étant **caractérisé par** une première vanne d'étranglement (50) disposée de manière opérationnelle pour contrôler les flux de fluide dans le premier élément tubulaire (40) ;
une seconde vanne d'étranglement (45) disposée de manière opérationnelle pour contrôler les flux de fluide dans le second élément tubulaire (45) ; et
un système de commande (60) configuré pour commander l'unité de génération électrique (20) et les première et seconde vannes d'étranglement (40, 45) afin d'agir sur le son produit par le groupe frigorifique de transport (10).

2. Groupe frigorifique de transport (10) selon la revendication 1, dans lequel le système de commande (60) est configuré pour commander l'unité de génération électrique (20) et les première et seconde vannes d'étranglement (40, 45) afin de fonctionner au moins dans un mode de refroidissement relativement silencieux et dans un mode de refroidissement relativement bruyant.

3. Groupe frigorifique de transport (10) selon l'une des revendications 1 ou 2, dans lequel l'unité de génération électrique (20) comprend un moteur (21) configuré pour produire des produits de combustion et un collecteur d'échappement (22) à travers lequel les produits de combustion produits dans le moteur (21) sont acheminés et l'élément catalytique (30) comprend un silencieux.

4. Groupe frigorifique de transport (10) selon l'une quelconque des revendications 1 à 3, dans lequel le système de commande (60) est configuré pour commander l'unité de génération électrique (20) et les première et seconde vannes d'étranglement (40, 45) conformément à la programmation.

5. Groupe frigorifique de transport (10) selon l'une quelconque des revendications 1 à 3, dans lequel le système de commande (60) est configuré pour commander l'unité de génération électrique (20) et les première et seconde vannes d'étranglement (40, 45) en fonction d'un lieu, d'une heure, d'un horaire et de combinaisons de ceux-ci.

6. Groupe frigorifique de transport (10) selon l'une quelconque des revendications 1 à 5, dans lequel le système de commande (60) comprend :
un contrôleur d'unité de génération électrique (61), configuré pour contrôler un régime de l'unité de génération électrique (20) ; et
une unité de calcul (62) disposée en communication avec la première et la seconde vannes d'étranglement (40, 45) et le contrôleur de l'unité de génération électrique (61) et configurée pour commander les états d'ouverture et de fermeture de la première et de la seconde vannes d'étranglement (40, 45) et pour ordonner au contrôleur de l'unité de génération électrique (61) de contrôler le régime de l'unité de génération électrique (20).

7. Groupe frigorifique de transport (10) selon la revendication 6, dans lequel :
le système de commande (60) comprend en outre un capteur de bruit (70) situé sur le tuyau d'échappement (35), et
l'unité de calcul (62) est en outre disposée en communication avec le capteur de bruit (70) et est configurée pour commander les états d'ouverture et de fermeture de la première et de la seconde vannes d'étranglement (40, 45) et pour ordonner au contrôleur de l'unité de génération électrique (61) de contrôler le régime de l'unité de génération électrique (20) en fonction des relevés du capteur de bruit (70).

8. Groupe frigorifique de transport (10) selon la revendication 1, dans lequel le système de commande (60) est configuré pour commander l'unité de génération électrique (20) et les première et seconde vannes d'étranglement (40, 45) afin d'agir sur le son produit par le groupe frigorifique de transport (10).

9. Groupe frigorifique de transport (10) selon la revendication 8, dans lequel le système de commande (60) est configuré pour commander l'unité de génération électrique (20) et les première et seconde vannes d'étranglement (40, 45) afin de fonctionner au moins dans un mode de refroidissement relativement silencieux et dans un mode de refroidissement relativement bruyant.

10. Groupe frigorifique de transport (10) selon l'une des revendications 8 ou 9, dans lequel l'unité de génération électrique (20) comprend un moteur configuré pour produire des produits de combustion et un collecteur d'échappement à travers lequel les produits de combustion produits dans le moteur sont acheminés et l'élément catalytique (30) comprend un silencieux.

11. Groupe frigorifique de transport (10) selon l'une quelconque des revendications 8 à 10, dans lequel le système de commande (60) est configuré pour commander l'unité de génération électrique (20) et les première et seconde vannes d'étranglement (40, 45) conformément à la programmation.

12. Groupe frigorifique de transport (10) selon l'une quelconque des revendications 8 à 10, dans lequel le système de commande (60) est configuré pour commander l'unité de génération électrique (20) et les première et seconde vannes d'étranglement (40, 45) en fonction d'un lieu, d'une heure, d'un horaire et de combinaisons de ceux-ci.

13. Groupe frigorifique de transport (10) selon l'une quelconque des revendications 8 à 12, dans lequel le système de commande (60) comprend :
un contrôleur d'unité de génération électrique (61), configuré pour contrôler un régime de l'unité de génération électrique (20) ; et
une unité de calcul (62) disposée en communication avec la première et la seconde vannes d'étranglement (40, 45) et le contrôleur de l'unité de génération électrique (61) et configurée pour commander les états d'ouverture et de fermeture de la première et de la seconde vannes d'étranglement (40, 45) et pour ordonner au contrôleur de l'unité de génération électrique (61) de contrôler le régime de l'unité de génération électrique (20).

14. Groupe frigorifique de transport (10) selon la revendication 13, dans lequel :
le système de commande (60) comprend en outre un capteur de bruit (70) situé sur le tuyau d'échappement (35), et
l'unité de calcul (62) est en outre disposée en communication avec le capteur de bruit (70) et est configurée pour commander les états d'ouverture et de fermeture de la première et de la seconde vannes d'étranglement (40, 45) et pour ordonner au contrôleur de l'unité de génération électrique (61) de contrôler le régime de l'unité de génération électrique (20) en fonction des relevés du capteur de bruit (70).

15. Procédé d'actionnement d'un groupe frigorifique de transport (10), le procédé comprenant :
l'écoulement de produits de combustion entre une unité de génération électrique (20) et un élément catalytique (30) ;
l'écoulement de produits de combustion entre l'élément catalytique (30) et un tuyau d'échappement (35) ; et
le contrôle d'un régime de l'unité de génération électrique (20) et des états d'ouverture et de fermeture de :
une première vanne d'étranglement (50) fluidiquement interposée entre l'unité de génération électrique (20) et l'élément catalytique (30),
une seconde vanne d'étranglement (55) installée entre l'élément catalytique (30) et le tuyau d'échappement (35),
dans lequel le procédé comprend en outre la détection du bruit du groupe frigorifique de transport (10) au niveau du tuyau d'échappement (35) et l'exécution du contrôle du régime de l'unité de génération électrique et des états d'ouverture et de fermeture de la première et de la seconde vannes d'étranglement, en fonction des résultats de la détection.
